# EUROPÄISCHE PATENTANMELDUNG

(11) **EP 2 120 053 A1**
(43) Veröffentlichungstag der Anmeldung: **18.11.2009**
(21) Anmeldenummer: 08008881.8
(22) Anmeldetag: 14.05.2008
(51) Int. Cl.: G01P 5/24

(54) **System und Verfahren zur Überwachung von flexiblen oder beweglichen Bauteilen mittels Sensoren**

(71) Anmelder: ETH Zurich, 8092 Zurich (CH)
(72) Erfinder: Wartmann, Christoph, 8049 Zürich (CH)

(57) **Zusammenfassung**

Zur Überwachung, Messung, Prüfung und/oder Untersuchung von einem flexiblen bzw. beweglichen Material oder Bauteil wie Folien oder Gewebe, z.B. Segel, Kappen von Fall- und Gleitschirmen, Zeltbahnen, Klappen, die sich unter Belastung bewegen, z.B. durch die auftreffenden Luftkräfte bei einem Segelflugzeug, Gleitschirm oder dem Segel eines Segelboots, dient eine Mehrzahl von auf oder an dem Material angebrachten, vorzugsweise mit eigener Stromversorgung versehenen Sensor-Knoten, die ihre, die gemessene physikalische Grösse darstellenden Signale drahtlos an einen Empfänger übermitteln. Ein diesem nachgeschalteter Mikroprozessor erzeugt daraus Signale, die optisch, akustisch und/oder taktil dargestellt weden und quasi ein räumliches Abbild der gemessenen physikalischen Grössen bieten können, womit man z.B. auf auftretende Kräfte, Zustände oder Belastungen schliessen kann. Dies kann auch automatisch erfolgten und das Ergebnis zur Steuerung des betreffenden Geräts, z.B. des Gleitschirms oder Segelboots, dienen oder es kann die Annäherung an die Belastungsgrenze des Geräts angezeigt werden.

## Beschreibung

### Technisches Gebiet

Diese Erfindung betrifft die Überwachung, Messung, Prüfung oder Untersuchung und entsprechende Anzeige oder Darstellung der ermittelten Werte von Folien und Geweben, z.B Segeln, Kappen von Fall- und Gleitschirmen, Zeltbahnen, etc., die nachfolgend als flexibles Material bezeichnet sind. Solches flexibles Material bewegt sich normalerweise unter Belastung, z.B. durch die auftreffenden Luftkräfte bei einem Segel oder Gleitschirm. Überwacht man die Formänderung eines solchen flexiblen Materials oder die lokale Änderung physikalische Eigenschaften des Umgebungsmediums, so kann man daraus auf am flexiblen Material auftretende Kräfte schliessen. In ähnlicher Weise können auch bewegliche oder flexible Bauteile an einem an sich starren Bauelement, z.B. an einem Tragflügel eines Starrflügelflugzeugs, zur Ermittlung der Belastung oder Bewegung dienen. Diese Überwachung oder Messung ist besonders dann von Interesse, wenn sie zumindest teilweise automatisch erfolgt und daraus ein

Ergebnis abgeleitet wird, das beispielsweise zur Steuerung des betreffenden Geräts dient kann oder die Annäherung an die Belastungsgrenze des Materials oder Bauteils oder des damit ausgerüsteten Geräts angezeigt wird.

### Hintergrund und Stand der Technik

Fall- und Gleitschirme verwenden grosse, flexible, leichte Gewebe als wesentliches Konstruktionselement. Schwerere Gewebe, oft mit Kunststoff beschichtet, werden für Schiffssegel, Zelte und Planen für LKWs benutzt. Daneben finden Kunststofffoiien ähnliche Verwendung und dienen oft als Schutz gegen Wettereinflüsse oder sogar als Behälter für Flüssigkeiten.
All diese normalerweise grossflächigen, flexiblen Gewebe oder Folien werden nachfolgend als "flexibles Material" bezeichnet, ganz gleich, aus welchem Material sie bestehen und wofür sie verwendet werden.

Solchem flexiblen Material ist gemeinsam, dass es wegen seiner oftmals grossen Fläche grossen äusseren Kräften ausgesetzt sein kann. Dies können Luftkräfte bei Verwendung im Aussenbereich sein, wie z.B. Windkräfte an einem Zelt, oder Flüssigkeitskräfte, wenn das flexible Material für einen Flüssigkeitsbehälter verwendet wird. Ein besonderes Beispiel sind Fall- und Gleitschirme, bei denen das flexible Material (meist ein Gewebe) als eigentliches Tragelement dient, dessen Überwachung für den Fallschirmspringer oder Gleitflieger vorteilhaft oder sogar lebensnotwendig ist.

Auf einem anderen Gebiet, nämlich dem von Sensoren und der Halbleitertechnologie haben neuere Entwicklungen zu kleinen, robusten und preiswerten Sensoren geführt, die nur einen geringen Stromverbrauch haben und daher z.B. mittels Solarzellen betrieben werden können. Als sog. Sensor-Knoten vereinigen sie den eigentlichen Sensor mit einer Auswerte- und Kodierschaltung, von der ein digitales Ausgangssignal drahtlos abgegeben wird. Zusammen mit einem passenden Solarmodul, das ggf. integriert werden kann, lässt sich so eine robuste und unabhängige SensorEinheit gestalten, die mit ihrer geringen Baugrösse prädestiniert für neuartige Anwendungen mit drahtloser Signalübertragung ist.

Als Ausführungsbeispiel soll nachfolgend die Anwendung solcher Sensor-Knoten als Variometer besonderer Art bei einem Gleitschirm dienen. Die Erfindung ist jedoch nicht auf diese Anwendung beschränkt, sondern kann mit geringem Aufwand auf andere Anwendungen übertragen werden. Als Beispiele seien Segelboote genannt. Auch Starrflügelflugzeuge, insbesondere Segelflugzeuge, können so modifiziert werden, dass die Erfindung verwendet werden kann.

Für Flugzeuge, auch Gleitschirme, gibt es eine ganze Reihe von Variometer-Konstruktionen. Üblicherweise arbeiten diese mit einer singulären Messeinrichtung pneumatischer oder elektrischer Konstruktion und geben die Vertikalgeschwindigkeit des gesamten Flugzeugs oder Gleitschirms an. Solche Variometer sind auf dem Markt in vielen Ausführungen, oft in Kombination mit anderen Geräten, z.B. einem GPS, erhältlich.

In der deutschen Patentschrift DE 42 24 578 C1 von Fahr ist bei einem Gleitschirm oder Hängegleiter ein druckempfindlicher Sensor derart an den Gurten, die den Piloten halten, befestigt, dass die Straffung der Gurte zum Einschalten eines Flugzeitmessers benutzt werden kann. Dass Sensoren, insbesondere eine Mehrzahl von drahtlos gekoppelten Sensoren, zur Messung bzw. Überwachung aerodynamischer Eigenschaften bzw. Vorgänge dienen können, ist nicht erwähnt.

In der US-Patentschrift 7 231 180 B1 von Benson et al. ist ein drahtloses Netzwerk von verschiedenen Sensoren beschrieben, wobei diese in und an einem Flugzeugtriebwerk angeordnet sind und dieses überwachen.
Der Schwerpunkt der dort beschriebenen Lösung ist allerdings die Netzwerk-struktur. Hinweise auf die Messung bzw. Überwachung aerodynamischer Eigenschaften bzw. Vorgänge fehlen.

### Zusammfassung der Erfindung

Die vorliegende Erfindung stellt eine solche neuartige Anwendung von unabhängigen Sensor-Knoten, wie oben beschrieben, dar. In einer Ausführungsform werden auf dem zu überwachenden flexiblen Material eine Mehrzahl von solchen Sensor-Knoten angebracht, die drahtlose Signale an mindestens einen Empfänger abgeben. Letzterer ist mit einem Mikroprozessor verbunden oder enthält einen solchen als integralen Bestandteil. Von diesem Mikroprozessor werden die empfangenen Signale ausgewertet. Damit kann je nach dem im Sensor-Knoten verwendeten Sensor eine Aussage über die Verteilung der Belastung, Beschleunigung, Temperatur, etc. über die Fläche des flexiblen Materials erstellt werden kann. Diese Aussage kann als Anzeige für den Bediener des mit dem flexiblen Material ausgerüsteten Geräts erfolgen oder sogar automatisch in die Steuerung des Geräts eingreifen, z.B. zu seiner Stabilisierung.

Sind beispielsweise in der Kappe (Obersegel) eines Gleitschirms mehrere Sensor-Knoten mit Beschleunigungsmessern angeordnet, kann ein Abbild der momentanen lokalen Belastung des Schirms erstellt werden und damit auch der räumlichen Verteilung der Auf- bzw. Abwinde über die Fläche des Schirms.

Heute wird bei Segelfluggeräten (womit hier Starrflügel-Segelflugzeuge, Drachenflieger, Gleitschirme, etc. gemeint sind) zum Auffinden von Aufwinden, seien sie thermischer oder ander Art, zum Vermeiden von Abwinden oder einfach zur Messung der Vertikalgeschwindigkeit ein Variometer benutzt, das allerdings nur die Steig- bzw. Sinkgeschwindigkeit des gesamten Fluggeräts inklusive Pilot angibt. Über die Verteilung eines Aufwinds über die Tragfläche, d.h. des Schirms bei einem Gleitschirm, gibt das Variometer keine Auskunft. Gerade diese Verteilung kann aber für den Flug von entscheidender Bedeutung sein: Normalerweise wird der Pilot bestrebt sein, einen Aufwind optimal zu nutzen und möchte daher in die Richtung des stärkeren Aufwinds einkurven, wenn er ihn "angeschnitten" hat oder weiter dort kreisen, wo er das Maximum festgestellt hat. Eines der üblichen Variometer gibt darauf keinen Hinweis.

Die vorliegende Erfindung beseitigt diesen Mangel. Schon zwei, an verschiedenen Stellen der Gesamtfläche des flexiblen Schirms verteilt angebrachte, beschleunigungsempfindliche Sensor-Knoten erlauben es, festzustellen, wo, d.h. auf welcher Seite das Maximum des momentan durchflogenen Aufwinds liegt. Es ist vorteilhaft, mindestens je einem Sensor-Knoten an den Flügelenden anzubringen. Beim Durchfliegen eines Aufwinds wird der Schirm auf der Seite des grösseren Aufwinds lokal stärker beschleunigt als auf der anderen Seite. Der Vergleich der von den beiden Sensor-Knoten ermittelten Beschleunigungswerte zeigt an, auf welcher Seite der Kern des Aufwinds liegt.

Die von den Sensor-Knoten ermittelten Beschleunigungswerte werden per Funk an einen Empfänger übermittelt, der sie an einen Mikroprozessor zur weiteren Verarbeitung weiterleitet.

Eine Anzeige für den Piloten kann vorteilhaft mittels taktiler Elemente in einem oder zwei Fingerhandschuhen oder in anderer Weise unmittelbar am Körper des Piloten erfolgen, aber auch eine optische Anzeige auf einem Display ist möglich.

Die Sensor-Knoten können vorzugsweise auf der Innenseite des Obersegels an den Diagonalverstrebungen in der Nähe der Wingtips angeordnet werden.

Eine weitere Möglichkeit besteht darin, mehr als zwei Sensor-Knoten verteilt über die gesamte Breite des Obersegels anzuordnen. Damit kann eine differenzierte Aussage über die Aufwindverteilung gemacht werden.

Es ist auch möglich, Sensor-Knoten im Bereich der vorderen Eintrittskante des Gleitschirms anzubringen um z.B. ein Warnsignal abzugeben, das auf zu geringe Fluggeschwindigkeit und/oder die Gefahr des sog. "Einklappens" hinweist. Bei letzterem verliert der Schirm seine Tragfähigkeit; dieser Vorgang ist besonders gefürchtet, da er häufig zum Absturz führt.

Beim üblichen Starrflügel-Segelflugzeug wird ebenfalls derjenige Flügel stärker beschleunigt, an dem die grösser Gesamtkraft des Aufwinds oder Abwinds wirkt. Eine Anbringung von Sensor-Knoten an den Flügelspitzen kann auch hier zu einer Anzeige für die Aufwindverteiiung in ähnlicher Weise genutzt werden, wobei allerdings die Beschleunigung wegen des starren Flügels weniger stark ausgeprägt ist als bei einem flexiblen Schirm. Bei letzterem wird derjenige Bereich lokal stärker beschleunigt und bewegt sich, d.h. beult aus, auf den der grössere Druck ausgeübt wird, d.h. der stärkere Aufwind herrscht.

Eine Möglichkeit, auch beim Starrflügel-Segelflugzeug besser nutzbare Messwerte zu erhalten, bestünde darin, kleine bewegliche bzw. elastische Klappen oder andere nachgiebige Teile an den Flügelspitzen vorzusehen, an denen die Sensor-Knoten angebracht sind. Diese Klappen oder nachgiebigen Teile würden durch auftreffende Auf- oder Abwinde eine wesentlich grössere Beschleunigung erfahren als der gesamte Flügel.

Bei einem Segelboot erfüllen die Segel die Aufgabe des Vortriebs, wobei prinzipiell ähnliche Strömungsverhältnisse wie beim Gleitschirm herrschen, allerdings sind die Gefahren geringer und von anderer Art. Hier kann die Erfindung dazu dienen, die Segel- und Rudereinstellung zu optimieren.

Werden z.B. auf dem Grosssegel eines Segelboots verteilt mehrere Sensor-Knoten gemäss der Erfindung angeordnet, wobei diese beispielsweise die Geschwindigkeit und/oder die Strömungsrichtung der Luft erfassen, deren Anzeige zur Optimierung von Segelstellung, Bauchigkeit (Mastspannung) und Ruderstellung dienen kann. Hier würde die Erfindung sozusagen Gefühl und Auge des Steuermanns und/oder Skippers unterstützen oder teilweise ersetzen.

Bei einer Anbringung von Sensor-Knoten am Vorsegel liessen sich Signale erzeugen, die den Skipper auf die Optimierung der Vorsegelstellung oder auf die Notwendigkeit des Reffens hinweisen. Bei einem Rollreff ist sogar ein automatisches Reffen möglich, was sicher für Einhandsegler nützlich wäre.

### Beschreibung von Ausführungsbeispielen

Nachfolgend wird die Erfindung an Hand zweier Ausführungsbeispiele, die auch in den dazugehörigen Zeichnungen dargestellt sind, im Detail erläutert. Auf den Zeichnungen zeigen:
- Fig. 1: eine schematische Gesamtansicht einer ersten Ausführungsform der Erfindung an einem Gleitschirm;
- Fign. 2a, 2b: zwei Beispiele für Anzeigen;
- Fig. 3: eine Gesamtansicht einer zweiten Ausführungform an einem Gleitschirm;
- Fig. 4: eine schematische Gesamtansicht einer Ausführungsform der Erfindung auf einem Segelboot; und
- Fig. 5: eine schematische Ansicht eines geeigneten elektronischen Systems.

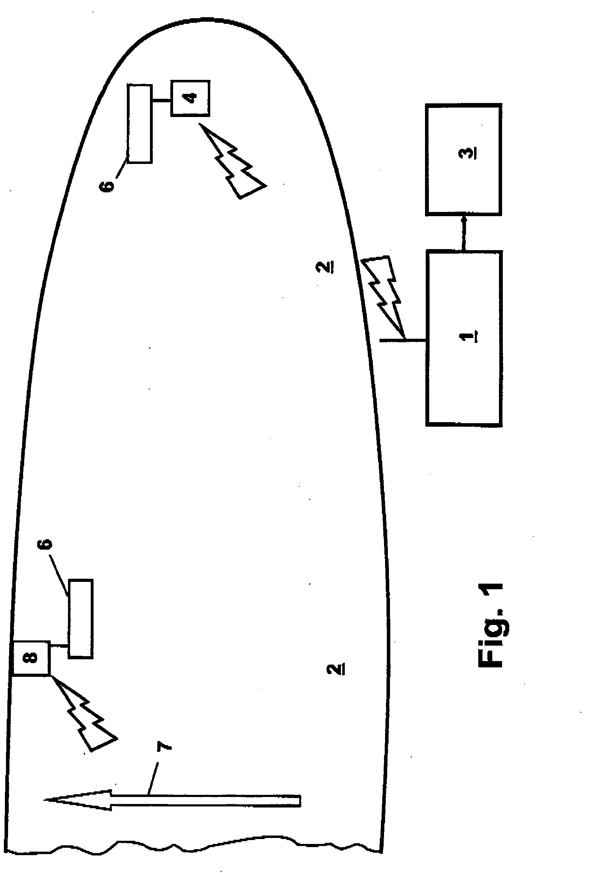

Fig. 1 zeigt die schematische Ansicht eines erfindungsgemässen Systems am Beispiel eines Gleitschirms; es ist nur eine Seite des Obersegels 2 eines Gleitschirms gezeigt. Die Flugrichtung ist durch den Pfeil 7 angedeutet. Am Obersegel 2 ist an jeder Flügelspitze je ein Sensor-Knoten 4 angebracht, vorzugsweise an der Innenseite des Obersegels 2 um die Strömung möglichst wenig zu beeinflussen. Dieser Sensor-Knoten 4 enthält einen Beschleunigungsmesser, der die lokale Vertikalbeschleunigung des ihn umgegebenden flexiblen Materials des Obersegels 2 ermittelt und in ein Signal umwandelt, das mittels eines im Sensor-Knoten 4 enthaltenen Senders drahtlos an einen Empfänger übermittelt wird, wobei letzterer einen Mikroprozessor enthält oder mit einem solchen ein integriertes Bauteil bildet. Vom Empfänger/Mikroprozessor 1 erfolgt eine Signalausgabe an ein Anzeigegerät 3, das weiter unten näher beschrieben wird.

Zur Stromversorgung kann der Sensor-Knoten 4 ein Solarpanel aufweisen oder mit einem solchen verbunden sein. Dieses Solarpanel, in Fig. 1 ist ein separat angeordnetes gezeigt, kann auf oder unter dem Obersegel 2 angebracht sein.

Die beschriebenen Sensor-Knoten sind inzwischen handelsüblich. Beispiele sind die von der Firma Particle Computer GmbH, Karlsruhe, oder der Firma Scatterweb GmbH, Berlin, auf dem Markt erhältlichen Sensor-Knoten.

Sensoren für die Druckmessung, also verwendbar zur barometrischen Höhenmessung, werden beispielsweise von der Firma Intersema Sensoric SA, Bevaix, Schweiz, und von der Firma Bosch Sensortec GmbH in Reutlingen, Deutschland angeboten. Von letzterer sind auch Beschleunigungsmesser und Gyroskope erhältlich.

Die drahtlose Übertragung kann vorzugsweise über ein ZigBee-Funknetz gemäss IEEE-Standard 802.15.4 erfolgen, was den Vorteil geringen Leistungsbedarfs hat. Dadurch ist auch eine Stromversorgung mittels einer kleinen Batterie möglich.

Jeder Sensor-Knoten überträgt neben der gemessenen physikalischen Grösse, z.B. Beschleunigung und/oder Druck, auch seine Kennung, womit er angibt, wo, d.h. an welcher Stelle des Obersegels die physikalische Grösse gemessen wurde.

Beim Einfliegen in einen Aufwind beult das Obersegel 2 wegen seiner geringen Masse unmittelbar nach oben aus. Der Sensor-Knoten 4 ermittelt die Grösse der plötzlichen Vertikalbeschleunigung eines Teils des Obersegels 2 und bildet daraus ein Signal, das, wie in Fig. 1 angedeutet, drahtlos an den Empfänger/Mikroprozessor 1 übertragen wird. In den meisten Fällen wird der eine der beiden Sensor-Knoten 4 eine grössere Beschleunigung erfahren als der an der anderen Flügelspitze angeordnete. Der Kern des Aufwinds befindet sich natürlich auf der Seite mit der grösseren Vertikalbeschleunigung. Der Pilot kann dann nach dieser Seite einkurven um sein Steigen im Aufwind zu optimieren.

Analog gilt beim Einflug in ein Gebiet absinkender Luft, dass der derjenige Sensor-Knoten 4 die grössere Vertikalbeschleunigung, die jetzt natürlich nach unten gerichtet ist, erfährt, in dessen Umgebung die Umgebungsluft die grössere Abwärtsbewegung ausführt. Der Pilot kann dann zur anderen Seite kurven, um das Gebiet grösseren Fallens zu umfliegen.

Moderne Gleitschirme haben eine Ober- und ein Untersegel, die im Flug einen bestimmten Abstand voneinander aufweisen, der durch die bei Fahrt einströmende Luft gebildet und gehalten wird und durch entsprechende Leinen oder Bänder zwischen Ober- und Untersegel begrenzt wird. Der Gleitschirm wird sozusagen vom Fahrtwind aufgeblasen und erhält damit seine aerodynamische Form. Flugverhalten, Stabilität und Tragfähigkeit hängen entscheidend von dieser Form ab und jede Veränderung dieser Form kann zu einem kritische Flugzustand führen.

Besonders gefürchtet ist das sog. "Einklappen" des Gleitschirms, das durch zu geringe Geschwindigkeit oder Böen hervorgerufen werden kann. Um dieser Gefahr zu begegnen, ist an der Eintrittskante des Gleitschirms, vorzugsweise am Obersegel 2, ein weiterer Sensor-Knoten 8 angeordnet, der ebenfalls zur Messung der Vertikalbeschleunigung des ihn umgegebenden Teils des Segels ausgelegt ist. Dieser Sensor-Knoten 8 arbeitet in gleicher Weise wie oben für die Sensor-Knoten 4 an den Flügelspitzen beschrieben.

Sobald der Sensor-Knoten 8 eine negative, also nach unten gerichtete Vertikalbeschleunigung ermittelt, überträgt er ein entsprechendes Signal an den Empfänger/Mikroprozessor 1, der wiederum ein als Warnung dienendes Signal an den Piloten übermittelt.

Jeder der Sensor-Knoten 4 oder 8 kann neben dem beschriebenen Bechleunigungs-Sensor für die Vertikalbeschleunigung noch einen Drucksensor enthalten. Damit ist es möglich zusätzlich Druckhöhe und Vertikalgeschwindigkeit des Gleitschirms anzuzeigen. Zwar liesse sich die Vertikalgeschwindigkeit auch aus der Integration der Beschleunigungswerte ermitteln, eine zusätzliche oder alleinige barometrische Messung ist jedoch vorteilhaft. Die Anzeige kann analog zu in der Fliegerei üblichen Höhenmessern bzw. Variometern ausgelegt werden.

Das in Fig. 1 als einfacher Block dargestellte Anzeigegerät 3 ist z.B. ein übliches Display, das gross genug sein muss, um die ermittelten Werte übersichtlich und für den Piloten unter allen Umständen gut ablesbar darzustellen. Es kann auch, wie es bei Segelflugzeugen üblich ist, ein Variometer mit akustischer Anzeige enthalten, bei dem die Grösse des Steigens oder Fallens mit der Höhe eines Tons angezeigt wird, wobei der Ton im Steigen unterbrochen und im Fallen kontinuierlich erklingt.

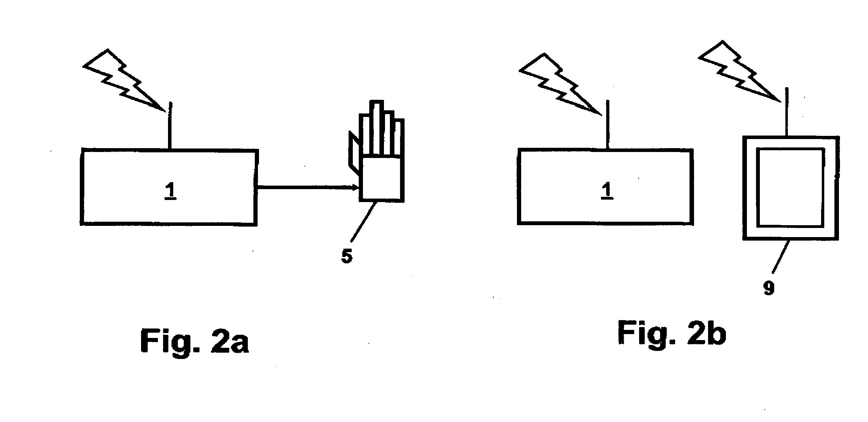

Eine insbesondere für Gleitschirme gut geeignete Anzeige ist in Fig. 2a dargestellt. Es handelt sich hier um eine taktile Anzeige im oder am Handschuh 5 des Gleitschirm-Piloten. Z.B. ist an einer "Fingerkuppe" des Handschuhs 5 ein Vibrator angebracht, der von dem Empfänger/Mikroprozessor 1 angesteuert wird. Falls nur ein einzelner Vibrator benötigt wird, kann er auch so angeordnet sein, dass er die Handfläche oder den Handrücken berührt. Wenn mehrere Fingerkuppen mit Vibratoren ausgerüstet sind, so ist jeder dieser Vibratoren einzeln ansteuerbar.

Die Vibratione-Signale im rechten Handschuh stammen vom Sensor-Knoten (4) am rechten Segel (siehe Fig.1) und die Signale im linken Handschuh vom nicht dargestellten Sensor-Knoten am linken Segel. Der Vorteil dieser taktilen Anzeige ist, dass der Pilot in seinen Händen bereits die Rechts-Links-Lage spürt und damit ohne weitere Überlegung reagieren kann. Insbesondere bleibt sein Blick frei für die Beobachtung der Umgebung und ist nicht an die Instrumente gebunden. Dies ist besonders beim bodennahen Fliegen in bergiger Umgebung ein unschätzbarer Vorteil und Sicherheitsgewinn.

Das taktile Signal kann so ausgeführt werden, dass die Vibrationsfrequenz die Grösse der Beschleunigung nach oben oder unten angibt, wobei eine Bechleunigung nach oben (positiv) durch kurzzeitige Unterbrechungen der Vibration angezeigt wird. Fühlt also der Pilot beispielsweise rechts eine höhere unterbrochene Vibration als links, oder links nur eine ununterbrochene Vibration, weiss er, dass der Kern des Aufwinds rechts von seiner Flugbahn liegt und kann entsprechend reagieren. Üblicherweise wird dann rechts einkurven, falls er dort Raum hat.

Die taktile Anzeige kann aber auch analog zum Segelflugzeug-Variometer durch Änderung der Vibrationsfrequenz Steigen oder Fallen - also nicht die Beschleunigung, sondern die Geschwindigkeit - angeben und mit kurzzeitiger, "gehackter" Unterbrechung Steigen vom Fallen unterschiedlich anzeigen. Mit einer taktilen Anzeige könnte von einem vogelähnlichen Empfinden sprechen.

In Fig. 2b ist eine andere Möglichkeit der Anzeige skizziert. Ein Funkempfänger, z.B. ein PDA, empfängt vom Empfänger/Mikroprozessor 1, der hier auch als Sender arbeitet, per Funk (drahtlos) die anzuzeigenden Signale und stellt sie in geeigneter Form auf dem Display 9 dar, wobei letzteres natürlich in Sichtweite des Piloten angebracht sein muss. Die visuelle Darstellung kann durch eine akustische Anzeige wie sie oben für Segelflugzeuge beschrieben wurde, ergänzt werden.

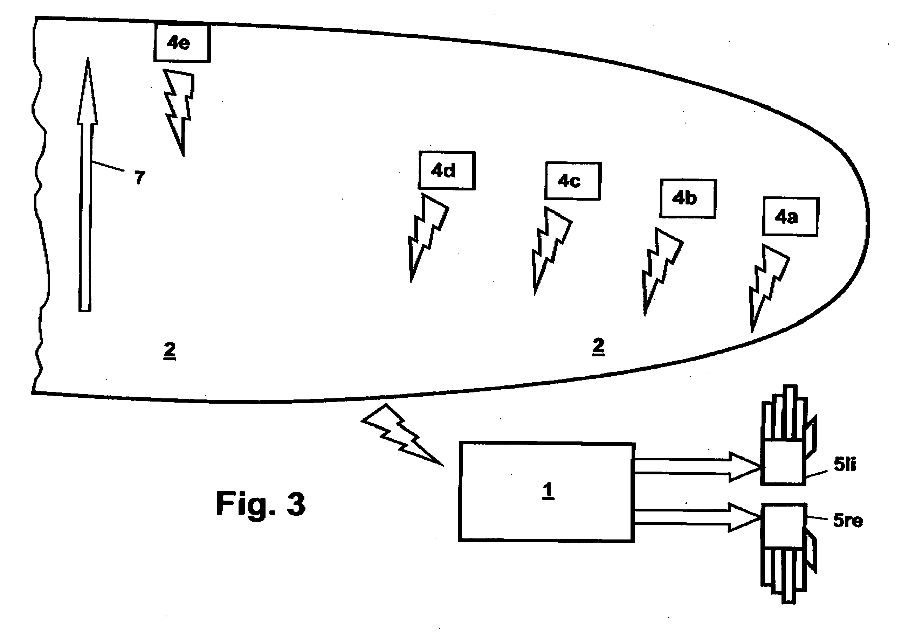

In Fig. 3 ist eine Anordnung mit insgesamt fünf Sensor-Knoten 4a bis 4e und einer taktilen Handschuh-Anzeige dargestellt. Gezeigt ist nur die rechte Hälfte des Obersegels 2; auf der nicht gezeigten linken Hälfte des Obersegels befinden sich ebenfalls fünf Sensor-Knoten, symmetrisch zur rechten Hälfte angeordnet. Weiterhin ist der Empfänger/Mikroprozessor 1 gezeigt, der mit zwei "taktilen" Handschuhen verbunden ist, einem rechten Handschuh 5re und einem linken Handschuh 5li. Jeder dieser Handschuhe 5re und 5li weist in den jeweils fünf Fingerkuppen je einen Vibrator auf. Jeder dieser Vibratoren wird vom Empfänger/Mikroprozessor 1 einzeln angesteuert; dies ist durch die breiten Pfeile angedeutet.

Die Sensor-Knoten 4a bis 4d befinden sich von der Spitze ausgehend weiter innerhalb des Obersegels 2. Sie können natürlich auch anders angeordnet sein als dargestellt; z.B. kann sich ein Sensor an der Segelhinterkante befinden oder mehrere Sensoren an der Vorderkante des Obersegels. Auch der in Fig. 3 an der Vorderkante befindliche Sensor-Knoten 4e, der dem Sensor-Knoten 8 in Fig. 1 entspricht, kann sich an einer anderen Stelle befinden. Die Signale der fünf Sensor-Knoten der (gezeigten) rechten Hälfte des Obersegels 2 werden vom EmpfängerlMikroprozessor 1 verarbeitet und an die fünf Fingerkuppen-Vibratoren im rechten Handschuh 5re übermittelt und zwar so, dass jeder Fingerkupppen-Vibrator das Signal jeweils eines Sensor-Knotens anzeigt. Dies ist möglich, da, wie oben dargelegt, jeder Sensor-Knoten seine Kennung an den Empfänger/Mikroprozessor 1 übermittelt.

Zum Beispiel kann der an der Vorderkante befindliche Sensor-Knoten 4e den Vibrator am Daumen des rechten Handschuhs 5re "bedienen" und der an der Segelspitze befindliche Sensor-Knoten 4a den Vibrator am kleinen Finger, etc. Die Sensor-Knoten der linken Hälfte des Obersegels (nicht gezeigt) bedienen symmetrisch die entsprechenden Fingerkuppen-Vibratoren des linken Handschuhs 5li. Für den Piloten ergibt das eine an den Fingerkuppen spürbare, räumliche Verteilung der am Obersegel ermittelten Beschleunigung.

Zusätzlich kann ein Sensor-Knoten auch ein Gyroskop enthalten und die davon ermittelten Lage-Daten als codierte Signale zusammen mit seiner Kennung drahtlos an den Empfänger übermitteln.

Es kann auch vorgesehen werden, bestimmte Messwerte, insbesondere (barometrische) Druck-Messwerte im Sinne einer Total-Energie-Kompensation durch gemessene Geschwindigkeitswerte zu korrigieren, um so Steigwerte zu erhalten, die unabhängig von der geflogenen Geschwindigkeit sind. Dies ist bei Segelflugzeug-Variometern üblich und bedarf daher keiner näheren Erläuterung.

Als zweites Beispiel wird nachfolgend eine Anwendung der Erfindung auf Segelbooten gezeigt und beschrieben.

Hier dient das erfindungsgemässe System und Verfahren zur Überwachung und Trimmung der Segel, insbesondere zur exakten und übersichtlichen Messung (Analyse) der Segelstellung und -einstellung (Segeltrimmung).

Derzeit wird die Segeltrimmung durch Sichtprüfung von am Vor- und Grosssegel angebrachten Trimmfäden ermittelt. Diese Trimmfäden sind üblicherweise sowohl an der Luv-, wie an der Leeseite, meist am Achterliek (Hinterkante) des Segels angeordnet und bestehen aus einem wenige Zentimeter langen, mit einem Ende am Segel befestigten Faden, dess anderes Ende frei ist. In Fahrt stellt sich der Trimmfaden entsprechend der an dieser Stelle des Segels herrschenden Strömung ein.

Ein gei5bier Skipper (Schiffsführer) kann nun an der Stellung und Bewegung der Trimmfäden erkennen, wie die Strömungsverhältnisse an den verschiedenen Stellen des Segels sind und das bzw. die Segel entsprechend trimmen.

Generell kann man sagen, dass, wenn die Trimmfäden parallel "fliegen", die Luftströmung am Segel zumindest näherungsweise laminar ist, womit das betreffende Segel optimal getrimmt ist. Der Skipper kann allerdings mehr erkennen, indem er auch die Unterschiede von Luv und Lee und die unterschiedliche Stellung von Trimmfäden in unterschiedlichen Positionen, insbesondere in verschiedenen Höhen am Segel, beobachtet.

Natürlich wird der Skipper kaum alle Trimmfäden gleichzeitig sehen können, was sich als Nachteil erweist. Je nachdem, wo er sich befindet, wird er nur die Trimmfäden auf Luv oder Lee oder von der Fock oder vom Grosssegel sehen. Oft hat der Rudergänger die bessere Sicht, aber dieser ist nicht für Schiffsführung und Segeltrimmung verantwortlich. Auch der Vorschoter wird im Normalfall nur einen Teil der Trimmfäden sehen, doch gilt für ihn auch, dass er nicht Schiffsführung verantwortlich ist, sondern allenfalls für die Trimmung des Vorsegels (Fock).

Eine weitere Schwierigkeit ergibt sich bei grossen Yachten. Dort ist es schwierig, die Stellung der am oberen Ende des Grosssegels angebrachten Trimmfäden zu erkennen, da sich diese oft mehr als 20 m oberhalb des Schiffsdecks befinden.

Die meisten Segelyachten besitzen zudem einen Windmesser (Verklicker) auf der Spitze des Mastes, der oft eine elektronische Anzeige im Cockpit oder am Mast bedient. Während ein einfacher mechanischer Verklicker nur den scheinbaren Wind anzeigen kann, ist mit elektronischen Windmessern über die z.B. per GPS ermittelte Richtung und Eigengeschwindigkeit des Schiffes das Errechnen des wahren Windes möglich.

Der Nachteil dieser Einrichtungen ist, dass weder die Trimmfäden an den Segeln noch die Anzeige der vom Windmesser ermittelten Werte jedem Crewmitglied auf dem Boot zur Verfügung stehen, meist noch nicht einmal dem Skipper als dem Schiffsführer. Ein weiterer Nachteil ist, dass die Anzeige der Trimmfäden überhaupt nicht in irgendeiner Rechnung berücksichtigt werden kann, da sie ja nur als visuell wahrnehmbare Anzeige existiert.

Auch hier bietet die vorliegende Erfindung eine Lösung. Über ein kabelloses Netzwerk ermöglicht sie nicht nur, dass jedem Crewmitglied alle ermittelten Werte zur Verfügung stehen, sondern sie erlaubt auch die Anzeige bzw. Berücksichtigung der aerodynamischen Verhältnisse an den Segeln.

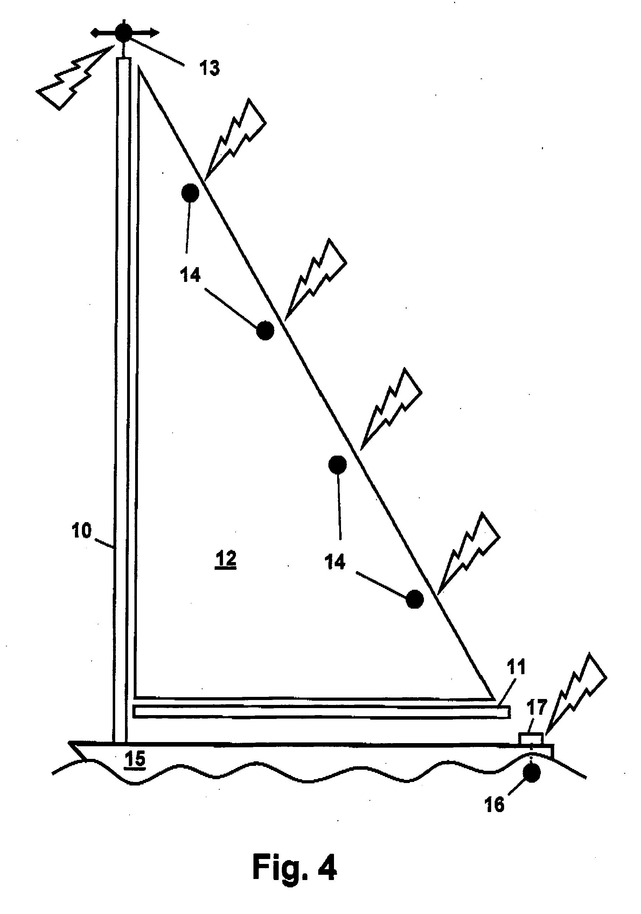

Fig. 4 zeigt in schematischer Darstellung eine erfindungsgemässe Anordnung auf einem Segelboot mit dem Bootsrumpf 15. Mast 10 und Baum 11 sind skizziert und es ist nur ein Segel 12 gezeigt. Am Segel 12 befinden sich an Stelle der üblichen Trimmfäden vier Sensor-Knoten 13, wie sie oben bereits beschrieben sind. Natürlich kann eine andere Anzahl und oder eine Anbringung an anderen Stellen vom Grosssegel und/oder von anderen Segeln verwendet werden. Im vorliegenden Fall enthält jeder Sensor-Knoten 14 einen Sensor für die Strömungsgeschwindigkeit der vorbeifliessenden Luft und einen Sensor für deren Strömungsrichtung.
Die Sensor-Knoten sind 14 - wie auch für Trimmfäden üblich - an beiden Seiten eines Segels angebracht.

Die von den Sensor-Knoten 14 ermittelten Werte werden per Funk - hier kann wieder der o.g. ZigBee-Standard verwendet werden - an einen (hier nicht gezeigten) Empfänger/Mikroprozessor übermittelt, wie er in den Figuren 2a und 2b gezeigt ist. In der vorliegenden Anwendung ist die Anordnung gemäss Fig. 2b vorzuziehen, wie weiter unten erläutert wird.

Wie beim ersten Ausführungsbeispiel beschrieben, wird jeder Sensor-Knoten 14 von einem (nicht gezeigten) Solarpanel versorgt. Ebenso gut kann aber auch ein kleiner Akku oder eine Batterie verwendet werden, da der Leistungsbedarf einer ZigBee-Verbindung sehr gering ist.

Weiterhin ist an der Mastspitze ein Windmesser 13 vorgesehen, der ebenfalls einen Sensor-Knoten darstellt. Er ermittelt Geschwindigkeit und Richtung des scheinbaren Windes und übermittelt diese Werte ebenfalls an den Empfänger/Mikroprozessor, der eine Art Zentrale darstellt.

Eine weitere Messung erfolgt im bzw. unter Wasser. Dort wird mittels des Logs 16 die Geschwindiglkeit des Bootes gegenüber dem Wasser gemessen und der ermittelte Wert über den Sender 17 ebenfalls an den Empfänger/Mikroprozessor übertragen.

An geeigneter Stelle kann weiterhin ein GPS installiert sein, dessen ermittelte Werte nicht nur - wie üblich - zur Navigation dienen können, sondern auch zusammen mit anderen Werten zur rechnerischen Ermittlung des wahren Windes und/oder der Strömungsverhältnisse des Wassers.

Ein weiterer, in Fig. 4 nicht dargestellter Sensor kann die Ruderstellung ermitteln und diese an den Empfänger/Mikroprozessor übertragen, so dass die Ruderstelleung ebenfalls für eine Optimierung der Fahrt zur Verfügung steht.

Der Empfänger/Mikroprozessor kann z.B. ein entsprechend ausgerüsteter Laptop sein, der sich in der Bootskajüte befindet. Dieser erlaubt auf dem vergleichsweise grossen Display eine grosszügige Darstellung der gemessenen und ggf. errechneten Werte. Interessanter und den Verhältnissen auf einem Segelboot angemessen ist aber eine drahtlose Übertragung vom Empfänger/Mikroprozessor als Zentrale an Mobilgeräte bei den einzelnen Crewmitgliedem. Zu diesem Zweck besitzt das jeweilige Crewmitglied einen Empfänger mit einem Display, das z.B. ein am Handgelenk tragbarer, vorzugsweise spritzwassergeschützter PDA sein kann. Auf diesem PDA werden die Daten in geeigneter, gut ablesbarer Form dargestellt, wobei das Crewmitglied ggf. die Darstellung bestimmter Daten unterdrücken kann.

Auf diese Weise kann z.B. der Skipper unabhängig von seiner Position auf dem Boot nicht nur die Segeltrimmung "im Auge behalten", also auch dann, wenn er das oder die Segel gar nicht sieht, sondern er kann auch die Fahrt und/oder den Kurs jederzeit optimieren. Ausserdem kann jedes Crewmitglied unmittelbar die Wirkung einer Aktion verfolgen und damit zu einem optimalen Fahrtverlauf beitragen. Es liegt auf der Hand, dass dies insbesondere beim Regattasegeln Vorteile bietet.

Im beschriebenen Fall verarbeitet die Software folgende Sensorwerte, die beispielsweise jede Sekunde aktualisiert werden:
- Strömungsgeschwindigkeit und -richtung an einem oder mehreren Segeln an der Luv- und Leeseite (Sensor-Knoten auf den Segeln);
- Geschwindigkeit und Richtung des scheinbaren Winds (Windmesser);
- Geschwindigkeit gegenüber Wasser (Log);
- Geschwindigkeit gegenüber Grund (GPS);
- Ruderstellung.

Es sollte klar sein, dass nicht alle o.g. Werte erfasst werden müssen. Z.B. kann es ausreichen, nur die Windverhältnisse zu ermitteln und anzuzeigen, um die Segeltrimmung zu optimieren.

Sollten die Entfernungen auf einem grösseren Schiff über das mit einem ZigBee-Funknetzwerk überbrückbaren Distanzen hinausgehen, so kann ein Multihop-Verfahren verwendet werden.

Es ist auch klar, dass mit der Erfassung und rechnerischen Verarbeitung der o.g. Werte neue Möglichkeiten für automatische Steuerungen entstehen. So könnte z.B. ein automatisches Reffen veranlasst werden, wenn die ermittelten Strömungsgeschwindigkeiten bestimmte Werte überschreiten.

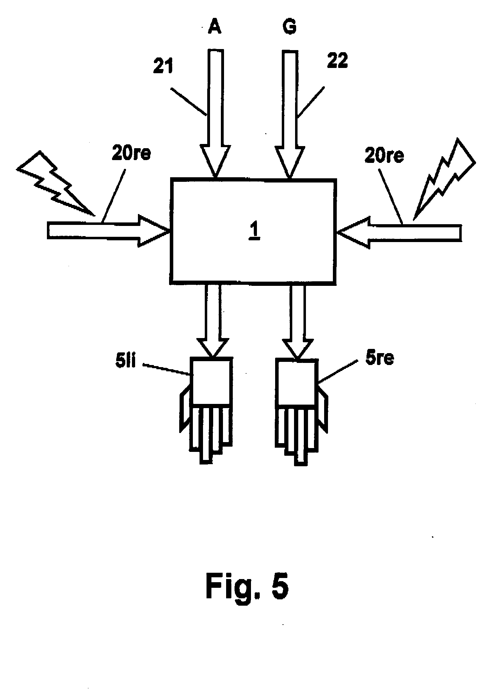

Fig. 5 schliesslich zeigt die schematische Gesamtansicht eines elektronisches Systems, wie es z.B. für die in Fig. 3 dargestellte Anordnung verwendet werden kann. Der Empfänger/Mikroprozessor 1 empfängt, wie durch die Pfeile 20re dargestellt, von den in Fig. 3 gezeigten fünf am rechten Flügel 2 angeordneten Sensor-Knoten 4a bis 4e (siehe Fig. 3) per Funk die jeweils ermittelten Beschleunigungsmesswerte. Ebenso empfängt der Empfänger/Mikroprozessor 1 Beschleunigungsmesswerte von (nicht dargestellten) fünf Sensor-Knoten am linken Flügel. Dies ist in Fig. 5 durch den Pfeil 20li dargestellt.

Ausserdem werden dem Empfänger/Mikroprozessor 1 zwei weitere Signale zugeführt: Einmal einen Höhenmesswert von einem Altimeter (meist ein barometrischer Höhenmesser) A. Dies kann per Funk oder per Draht erfolgen; in Fig. 5 ist dies durch den Pfeil 21 angedeutet. Das zweite Signal ist ein Lagesignal, das durch ein Gyroskop G erzeugt wird; es dient zur Angabe der Querneigung (Querlage) des Gleitschirms und wird per Funk oder per Draht, angedeutet durch den Pfeil 22, an den Empfänger/Mikroprozessor 1 übermittelt. Der Höhenmesser A und/oder das Gyroskop kann vorteilhaft in den Empfänger/Mikroprozessor 1 integriert oder in nächster Nähe angeordnet werden. Dann erübrigt sich eine Funkverbindung, die ja einen nicht immer erwünschten Stromverbraucher darstellt.

Zusammengefasst verfügt der Empfänger/Mikroprozessor 1 also über insgesamt zehn Beschleunigungsmesswerte, je fünf von jeder Flügelhälfte, einen Höhenmesswert und einen die Querneigung des Gleitschirms angebenden Messwert.

Prinzipiell kann man bei Gleftschirmen und Segelflugzeugen, d.h. generell bei motorlosen Fluggeräten, zwei Flugzustände unterscheiden: Der eine Flugzustand ist ein Gleitflug zur Vorwärtsbewegung in mehr oder weniger gerader Linie, bei dem auch nach Aufwind gesucht wird. Dieser Gleitflug ist gekennzeichnet durch Kurven mit geringen Querneigungen und meist grössere Geschwindigkeit, wobei diese kein eindeutiges Kriterium ist.

Hauptsächlich will der Pilot ja vorwärts kommen. Der zweite Flugzustand ist der Kreisflug im (thermischen) Aufwind, unterr Segelfliegern auch "Kurbeln" genannt. Dieser ist ist gekennzeichnet durch Kurven mit grösseren Quemeigungen und geringere Geschwindigkeit als im Gleitflug. (Der Fall des Hangaufwinds oder des Wellenaufwinds, die beide einen Geradeausflug im Aufwind zulassen, sei hier einmal ausser Acht gelassen.)

Thermische Aufwinde sind unregelmässig, d.h. auch in vertikaler Richtung böig und haben sich praktisch dauernd ändernde Aufwindgeschwindigkeiten. Um einen solchen thermischen Aufwind optimal zu nutzen, d.h. mit dem jeweiligen Fluggerät die besten Steigwerte zu erreichen, sind dauernde Variationen der Flugbahn und Fluggeschwindigkeit erforderlich, die auch für einen geübten Piloten eine ständig neue Herausforderung darstellen. Man spricht von einer "Zentrierung der Thermik" und meint damit, durch Verlegen der Flugbahn möglichst nahe an den Aufwindkern möglichst hohe Steigwerte zu erreichen.

Bisher wird zur Optimierung des Steigens im Kreisflug das Variometer benutzt, das in verschiedenen Ausführungen kommerziell erhältlich ist, heute oft mit Integratoren, McCready-Rechnern, GPS, Anflugrechnern, etc. zu höchst komplexen elektronischen Geräten kombiniert. Auch das beste Variometer zeigt aber nur das Steigen des Fluggeräts in seiner Gesamtheit an, d.h. es gibt keinerlei Auskunft darüber, ob der das Steigen rechts oder links der Flugbahn grösser (oder kleiner) ist und es eventuell sinnvoll wäre, den im Aufwind geflogenen Kreis hin zum grösseren Steigen zu verlagern. Diese Entscheidung obliegt allein dem Piloten und seinem Gespür ab, was natürlich auch den guten Piloten vom mittelmässigen unterscheidet.

Hier setzt nun die Erfindung völlig neue Massstäbe. Durch die Verarbeitung mehrerer Signale, wobei mindestens zwei in der Nähe der Flügelspitzen gegenüber liegende prinzipiell genügen, kann ein Signal erzeugt werden, dass dem Piloten zeigt, auf welcher Seite das grössere Steigen vorhanden ist und in welcher Richtung er einkurven oder seinen Kreisflug verlagern sollte.

Die Anzeige kann in verschiedener Form erfolgen. Bei einem Segelflugzeug wird man eher eine optische Anzeige vorziehen, z.B. über den Cockpitrand verteilte, helle Leuchtdioden, deren Farbe und/oder Blinkfrequenz entsprechend den ermittelten Beschleunigungs- bzw. Steigwerten verändert werden können.

Für einen Gleitschirm wird nachfolgend ein vorteilhaftes Ausführungsbeispiel detailliert beschrieben, das mit Vibratoren in Handschuhen ausgerüstet ist, wie sie bereits im Zusammenhang mit den Fign. 2a und 3 erwähnt wurden.

In Fig. 5 sind diese Handschuhe als 5re und 5li als Paar dargestellt. Sie werden vom Piloten getragen, so dass sein Blick frei ist für die Beobachtung des Luftraums, was speziell bei Wettbewerben ein nicht zu unterschätzender Sicherheitsfaktor ist. Jeder Handschuh ist mit je einem Kabel an den Empfänger/Mikroprozessor 1 angeschlossen; eine Funkverbindung ist möglich, aber weniger sinnvoll, da sie ja einen Stromverbraucher darstellt. In jedem Finger jedes Handschuhs ist ein Vibrator (ein Bautyp, wie er in Handys benutzt wird) angebracht, dessen Vibrationsamplitude regelbar ist. Zusätzlich kann er ein- oder ausgeschaltet werden, so dass eine Vibration mit Unterbrechungen variabler Länge darstellbar ist.

Im Flug arbeiten sämtliche Sensor-Knoten auf/an den Flügeln, die die Beschleunigungsmesswerte liefern, ebenso der Höhenmesser, wobei hier die erste Ableitung (mathematisch) von Interesse ist, die Steigen oder Sinken des Gleitschirms anzeigt, also eine Variometermesswert. Ausserdem arbeitet das Gyroskop und meldet die Quemeigung des Gleitschirms an den Empfänger/Mikroprozessor 1.

Im nahezu geraden Gleitflug mit geringer Quemeigung in ruhiger oder sinkender Luft wird der Variometermesswert Sinken des Gleitschirms an den Empfänger/Mikroprozessor 1 melden, der Gleitschirm befindet sich ja im Sinkflug. Gleichzeitig meldet das Gyroskop eine Quemeigung von weniger als 5° bis maximal 10° oder 15°. Im Bereich eines Variometermesswerts von z.B. 0 bis -3,5 m/s, also "kein oder geringes Sinken", sind die Vibratoren abgeschaltet, d.h. es ist keine Vibration spürbar. Übersteigt der Wert z.B. -3,5 m/s, d.h. also "starkes Sinken", wird als Alarmsignal in den Handschuhen eine an allen Fingern gleichmässige Vibration angeregt, die dem Piloten dieses anomale Sinken signalisiert. Dabei kann die Vibrationsamplitude mit stärkeren Sinken zunehmen. Letztere Funktion ist aber nicht unbedingt erforderlich.

Fliegt der Pilot im nahezu geraden Gleitflug mit geringer Quemeigung in eine Aufwindgebiet ein, so wird der Höhenmesser bzw. das Variometer Steigen registrieren und einen entsprechend positive Variometermesswert an den Empfänger/Mikroprozessor 1 übermitteln. Jetzt werden die Vibratoren der einzelnen Finger jeder Hand einzeln angesteuert. Dabei erhält z.B. der Vibrator des kleinen Fingers ein unterbrochenes Signal, das dem Input des Sensor-Knotens an der Flügelspitze (4a in Fig. 3) entspricht, der Vibrator des Ringfingers eines, das dem Input des nächsten Sensor-Knotens zur Flügelmitte hin (4b in Fig. 3), usw. Der am weitesten innen liegende Sensor-Knoten (4e in Fig. 3) liefert Beschleunigungsmesswerte, die den Vibrator am Daumen beaufschlagen. Dabei entspricht die Vibrationsamplitude, also die empfundene Stärke der Vibration, dem vom jeweiligen Sensor übermittelten Beschleunigungsmesswert, vorzugsweise mit Unterbrechungen, wobei die Pausen desto kürzer werden, je stärker die Beschleunigung ist, die der jeweilige Sensor-Knoten übermittelt. Es werden also gemäss dem von jedem Sensor-Knoten (4a bis 4e in Fig. 3) auf den Flügeln übermittelten Beschleunigungswert Amplitude und Einschaltdauer (Pausenverhältnis) der Vibration jedes einzelnen Fingers so gesteuert, dass sowohl die Amplidude mit wachsender Beschleunigung grösser als auch die Pausen kürzer werden. Natürlich kann dieses Schema in jeder sinnvollen Form abgewandelt werden; dem Fachmann werden Variationen kein Problem bereiten.

Kreist nun der Pilot in den Aufwind ein - natürlich in diejenige Richtung, in die die stärkere Vibration auftrat, denn dort war das grössere Steigen - dann registriert das Gyroskop eine Querneigung über z.B. 90° oder 15°. Nun wird die "Anzeige", also das Vibrationsschema, geändert in der Form, dass der Empfänger/Microcontroller 1 aus den vom Höhenmesser erhaltenen Variometermesswerten, die das Steigen des (gesamten) Gleitschirms anzeigen, und den von jedem einzelnen Sensor-Knoten übermittelten Beschleunigungsmesswerten ein individuelles Vibrationsschema für jeden Finger erstellt. Mit anderen Worten, der Pilot fühlt an allen Fingern eine durch das Steigen des Gleitschirms gegebene unterbrochene Vibration, deren Stärke/Amplitude zunimmt und deren Pausen abnehmen, wenn der einem bestimmten Finger zugeordnete Sensor-Knoten eine positive, also nach oben gerichtete Beschleunigung erfährt. Damit kann der Pilot leicht erkennen, wo das grössere Steigen liegt und seinen Flugweg entsprechend ändern. In einem gleichmässigen Aufwind oder wenn der Pilot den Aufwind gut zentriert hat, wir er an allen Fingern nur die gleiche Vibration spüren, die ihm das Steigen anzeigt.

Alternativ können auch die von jedem Sensor-Knoten übermittelten Beschleunigungsmesswerte integriert werden und daraus Variometermesswerte für den Gleitschirm gewonnen werden, statt aus den Werten des Höhenmessers, wie oben beschrieben.

Bei sehr grossen Querneigungen, z.B. über ca. 35°, wird davon ausgegangen, dass es sich um eine Steilspirale handelt, wie sie unter Normalbedingungen nicht im Aufwind geflogen wird. Dann werden die beschriebenen Vibrationssignale nicht abgegeben, da ja keine Zentrierung notwendig ist.

Es liegt auf der Hand, dass das beschriebene taktile Anzeigeschema nur ein Beispiel ist. Es kann in vieler Hinsicht variiert werden, es kann z.B. ein unterbrechungsloses Vibrationsschema gewählt werden oder eines mit einer Variation der Vibrationsfrequenz. Es sollte auch klar sein, dass bei Verwendung einer kleineren Anzahl (z.B. zwei) verteilter Sensor-Knoten auch weniger Vibrationseinheiten (auch nur zwei) nötig sind, die auch an anderen Stellen statt an einem Handschuh angeordnet sein können. Für ein Starrflügel-Segefflugzeug wird man, wie oben bereits erwähnt, eher optische und/oder akustische Anzeigen vorziehen, die dort für Variometer heute schon üblich sind.

## Patentansprüche

1. System zur Ermittlung und Anzeige dynamischer Zustandsänderungen an einem flexiblen bzw. beweglichen Material oder Bauteil mittels vorzugsweise drahtlos kommunizierender Sensor-Knoten, **dadurch gekennzeichnet, dass**
- eine Mehrzahl von Sensor-Knoten (4a-4e, 14) auf oder an dem Material (2, 12) oder Bauteil verteilt angeordnet sind, wobei jeder Sensor-Knoten lokal mindestens eine physikalische Grösse ermittelt und ein entsprechend dieser Grösse codiertes Signal zusammen mit seiner Kennung drahtlos übermittelt,
- ein Empfänger (1) vorgesehen ist, der die codierten Signale empfängt,
- ein mit dem Empfänger verbundener Mikroprozessor vorgesehen ist, der die Signale und Kennungen verarbeitet und Ausgangssignale erzeugt, welche die gemessene physikalische Grösse mit ihrer Kennung optisch, akustisch und/oder taktil so wiedergibt, dass zumindest ein Teil der wiedergegebenen physikalischen Grösse dem jeweiligen Sensor-Knoten (4a-4e) zugeordnet werden kann.

2. System nach Anspruch 1, **dadurch gekennzeichnet, dass**
- die Messung der physikalischen Grösse fortlaufend erfolgt und in Echtzeit an den Empfänger (1) übermittelt wird.

3. System nach Anspruch 1 oder 2, **dadurch gekennzeichnet, dass**
- jeder Sensor-Knoten (4, 14) eine eigene Stromversorgung aufweist, die insbesondere als Solarzelle ausgebildet ist.

4. System nach mindestens einem der vorhergehenden Ansprüche, **dadurch gekennzeichnet, dass**
- die gemessene physikalische Grösse die Beschleunigung ist.

5. System nach mindestens einem der Ansprüche 1 bis 3, **dadurch gekennzeichnet, dass**
- die gemessene physikalische Grösse der Druck des umgebenden Mediums ist.

6. System nach mindestens einem der Ansprüche 1 bis 3, **dadurch gekennzeichnet, dass**
- die gemessene physikalische Grösse die Strömungsgeschwindigkeit und/oder Strömungsrichtung eines umgebenden Mediums ist.

7. System nach mindestens einem der vorhergehenden Ansprüche, **dadurch gekennzeichnet, dass**
- zumindest ein Sensor-Knoten (4a-4e, 14) mehr als eine physikalische Grösse misst und entsprechend codierte Signale für die gemessenen Grössen zusammen mit seiner Kennung drahtlos an den Empfänger übermittelt.

8. System nach mindestens einem der vorhergehenden Ansprüche, **dadurch gekennzeichnet, dass**
- zumindest ein Sensor-Knoten (4a-4e, 14) ein Gyroskop enthält und die davon ermittelten Lage-Daten als codierte Signale zusammen mit seiner Kennung drahtlos an den Empfänger (1) übermittelt.

9. System nach mindestens einem der vorhergehenden Ansprüche, **dadurch gekennzeichnet, dass**
- das flexible Material das Obersegel (2) eines Gleitschirms ist und die Sensor-Knoten (4a-4e) die Beschleunigung erfassen.

10. System nach mindestens einem der vorhergehenden Ansprüche, **dadurch gekennzeichnet, dass**
- das bewegliche Bauteil sich am Flügel eines Starrflügel-Flugzeugs befindet, insbesondere an den Flügelspitzen eines Segelflugzeugs, und dass die Sensor-Knoten die Beschleunigung erfassen.

11. System nach Anspruch 9 oder 10, **dadurch gekennzeichnet, dass**
- das vom Mikroprozessor ausgegebene Ausgangssignal optisch auf einem für den Piloten sichtbaren Display (9) dargestellt wird.

12. System nach Anspruch 9 oder 10, **dadurch gekennzeichnet, dass**
- das vom Mikroprozessor ausgegebene Ausgangssignal taktil an den Piloten übermittelt wird, insbesondere auf Aktuatoren in einem vom Piloten getragenen Handschuh (5re, 5li)

13. System nach mindestens einem der Ansprüche 1 bis 8, **dadurch gekennzeichnet, dass**
- das flexible Material das Segel (12) eines Bootes (15) ist und die Sensor-Knoten die (14) Strömungsrichtung und -geschwindigkeit der Luft ermitteln.

14. System nach Anspruch 13, **dadurch gekennzeichnet, dass**
- die vom Mikroprozessor ausgegebenen Ausgangssignale optisch auf einem für ein Crewmitglied auf Boots (15) sichtbaren Display (9) dargestellt wird, wobei dieses Display vorzugsweise vom Crewmitglied getragen wird.

15. System nach Anspruch 13 oder 14, **dadurch gekennzeichnet, dass**
- mit weiteren Sensor-Knoten (13, 16/17) weitere Daten, insbesondere scheinbarer Wind, Fahrt durchs Wasser, Fahrt über Grund, ermittelt und an den Empfänger (1) übermittelt werden.

16. Verfahren zur Ermittlung dynamischer Zustände an einem flexiblen bzw. beweglichen Material oder Bauteil mittels vorzugsweise drahtlos kommunizierender Sensor-Knoten (4,14), **dadurch gekennzeichnet, dass**
- jeder von einer Mehrzahl von auf oder an dem flexiblen bzw. beweglichen Material oder Bauteil (2, 12) verteilt angeordneter Sensor-Knoten (4a-4e, 14) jeweils lokal mindestens eine physikalische Grosse misst und ein entsprechend dieser Grösse codiertes Signal zusammen mit seiner Kennung drahtlos übermittelt,
- ein Empfänger (1) die codierten Signale empfängt,
- ein mit dem Empfänger verbundener Mikroprozessor die Signale und Kennungen verarbeitet und ein Ausgangssignal erzeugt, welches die räumliche Verteilung oder Zuordnung der gemessenen Grösse über dem flexiblen bzw. beweglichen Material oder Bauteil (2, 12) wiedergibt.
